(19) Europäisches Patentamt
European Patent Office
Office européen des brevets

(11) EP 3 422 461 A1

(12) EUROPEAN PATENT APPLICATION
published in accordance with Art. 153(4) EPC

(43) Date of publication:
02.01.2019 Bulletin 2019/01

(21) Application number: 16904625.7

(22) Date of filing: 08.06.2016

(51) Int Cl.:
*H01M 10/06* (2006.01) *H01M 2/16* (2006.01)
*H01M 2/18* (2006.01) *H01M 10/08* (2006.01)
*H01M 10/12* (2006.01)

(86) International application number:
PCT/JP2016/067115

(87) International publication number:
WO 2017/212590 (14.12.2017 Gazette 2017/50)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Hitachi Chemical Company, Ltd.
Chiyoda-ku
Tokyo 100-6606 (JP)

(72) Inventors:
- KIMURA Takayuki
Tokyo 100-6606 (JP)
- ARAKI Shingo
Tokyo 100-6606 (JP)
- ABE Masayuki
Tokyo 100-6606 (JP)
- HIRANO Hiroki
Tokyo 100-6606 (JP)

(74) Representative: Hoffmann Eitle
Patent- und Rechtsanwälte PartmbB
Arabellastraße 30
81925 München (DE)

# (54) LEAD ACID STORAGE BATTERY

(57) A lead acid storage battery comprises: a positive electrode and a negative electrode facing each other via a separator 10; and an electrolytic solution, wherein the separator 10 contains a polyolefin and silica, and the electrolytic solution contains an aluminum ion.

*Fig.1*

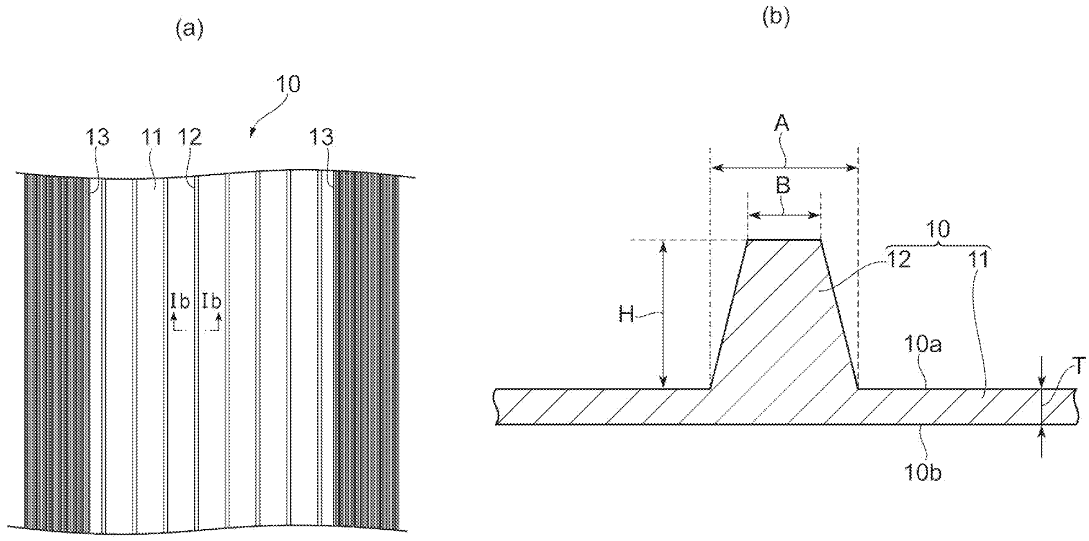


EP 3 422 461 A1

## Description

### Technical Field

The present invention relates to a lead acid storage battery.

### Background Art

In recent years, in the automobile, various measures to improve fuel consumption have been investigated, in order to prevent air pollution or global warming. As for automobiles which adopt measures to improve fuel consumption, for example, a micro-hybrid vehicle such as a start-stop system vehicle (hereinafter referred to as "ISS vehicle") which reduces an operation time of an engine, and a power generation control vehicle which reduces the power generation of an alternator by a power of an engine, has been investigated.

In the ISS vehicle, the number of times of starting the engine increases, and accordingly a discharge of a large current of a lead acid storage battery is repeated. In addition, in the ISS vehicle and the power generation control vehicle, the electrical power output by the alternator is reduced, the lead acid storage battery is intermittently charged, and accordingly the charging becomes insufficient.

The lead acid storage battery which is used in the above described way results in being used in a partially charged state, which is referred to as PSOC (Partial State Of Charge).

By the way, the lead acid storage battery has a structure in which, for example, a positive electrode (positive electrode plate and the like), a negative electrode (negative electrode plate and the like), and a sack-shaped separator which separates both of electrodes from each other and is made from a synthetic resin are layered. As for the above described separator, a ribbed microporous film is known wherein the ribbed microporous film has a main rib for coming in contact with a polar plate so as to protrude from one surface of a tabular sheet, and is formed mainly using polyolefin that is easily integrally worked with the rib and is easily worked into a sack. The separator consisting of this ribbed microporous film is usually designed so that the surface on which the main rib for coming in contact with a polar plate is provided so as to protrude comes in contact with the positive electrode plate. In addition, the surface opposite to the surface on which the main rib for coming in contact with the polar plate is provided so as to protrude is a flat surface on which the rib is not provided, and is designed so as to come in contact with the negative electrode plate.

In general, when a lead acid storage battery is charged, oxygen gas is generated from the positive electrode in the final stage of charging, and accordingly the surface of the separator facing the positive electrode is under an oxidizing atmosphere. Accordingly, the surface of the separator facing the positive electrode tends to be easily oxidized as compared with the surface facing the negative electrode, the separator deteriorates and becomes brittle, the thickness decreases, and the hole becomes easy to be formed. As a result, there is a case where short-circuit between the positive electrode and the negative electrode becomes a problem.

In addition, in the lead acid storage battery, when the charge and discharge are repeated, water is generated during discharge, and sulfuric acid is generated during charging. In addition, the specific gravity of the sulfuric acid is more than that of water and the sulfuric acid tends to easily settle out in the lower part; and accordingly a stratification phenomenon occurs in which a concentration of the electrolytic solution (sulfuric acid) becomes different between the upper part and the lower part of the battery. In a conventional engine vehicle, overcharge occurs during driving, and accordingly the stratification is alleviated by an agitating action of the electrolytic solution due to oxygen gas and hydrogen gas which are generated at the time from the positive electrode and the negative electrode. However, under the PSOC, the state of insufficient charging continues, accordingly the agitating action in the electrolytic solution due to the oxygen gas and the hydrogen gas resists developing, and the stratification tends to easily occur. When the stratification occurs, the concentration of the electrolytic solution in the upper part of the battery lowers, accordingly the dissolution amount of lead sulfate in the upper part of the battery increases, and a penetration short circuit becomes to easily occur.

In response to this, it is described in the following Patent Literature 1 to use a separator that is composed of a raw material composition which includes mainly polyolefin, an inorganic powder and a plasticizer and has a specific structure, in order to suppress a dendrite short (short circuit).

### Citation List

### Patent Literature

Patent Literature 1: Japanese Unexamined Patent Publication No. 2013-211115

## Summary of Invention

### Technical Problem

By the way, as a result of the investigation of the present inventors, it has been found that, when silica is used as the inorganic powder contained in the separator, the penetration short circuit tends to easily occur, and that it is anticipated that the penetration short circuit is not sufficiently suppressed by the technology described in, for example, the above described Patent Literature 1. For this reason, in recent years, it is required for the lead acid storage battery to further increase the short circuit-suppressing effect compared with a conventional technology.

In addition, in the ISS vehicles, the power generation control vehicles and the like, a large current charging is repeated in the lead acid storage battery by regenerative charging or the like, though the time period is short. It is known that, when the large current charging is repeated, electrolysis of water in the electrolytic solution occurs. When the electrolysis occurs, the oxygen gas and the hydrogen gas which have been generated by the decomposition of water are discharged to the outside of the battery, and accordingly water in the electrolytic solution decreases. As a result, a sulfuric acid concentration in the electrolytic solution increases, and the lowering of the capacity progresses due to the corrosion deterioration of the positive electrode, or the like. In addition, if the electrode (negative electrode or the like) is exposed from the electrolytic solution when the liquid surface of the electrolytic solution lowers, for example the following problems occur: the discharge capacity suddenly decreases, and the connecting portion between the electrode (negative electrode and the like) and the strap or the strap itself corrodes. For these reasons, when water in the electrolytic solution of the lead acid storage battery has decreased, it is necessary to perform maintenance by replenishing water in an amount corresponding to decreased water, but it is required for the lead acid storage battery to suppress the decrease in the water in the electrolytic solution, in view of no need for maintenance.

The present invention is designed with respect to the above described circumstances, and is directed to providing a lead acid storage battery which is excellent in short circuit-suppressing effect even when the separator containing silica is used, and is excellent in suppressing effect on the liquid reduction of the electrolytic solution.

### Solution to Problem

A lead acid storage battery of the present invention comprises a positive electrode and a negative electrode facing each other via a separator, and an electrolytic solution, wherein the separator contains polyolefin and silica, and the electrolytic solution contains an aluminum ion.

The lead acid storage battery of the present invention is excellent in short circuit-suppressing effect even when the separator containing silica is used. In addition, the lead acid storage battery of the present invention is excellent in suppressing effect on the liquid reduction of the electrolytic solution (for example, suppressing effect on the liquid reduction of the electrolytic solution due to large current charging and the like). In the lead acid storage battery of the present invention, the electrolytic solution contains an aluminum ion, and accordingly, even when the separator containing silica is used, short circuit-suppressing effect is excellent and also suppressing effect on the liquid reduction of the electrolytic solution is excellent.

In addition, according to the lead acid storage battery of the present invention, it is possible to obtain excellent battery characteristics while suppressing the short circuit, for example, it is possible to obtain excellent charge acceptability. Accordingly, it is possible to keep the SOC (State Of Charge) at an appropriate level, which tends to become low in the ISS vehicle, the micro-hybrid vehicle and the like, particularly after the charge and discharge has been repeated to some extent from the initial state and thereby the active material has been sufficiently activated. In addition, according to the lead acid storage battery of the present invention, it is possible to balance the excellent charge acceptability with other excellent battery characteristics (discharge characteristics, cycle characteristics and the like).

In addition, according to the lead acid storage battery of the present invention, it is possible to suppress shortening of the life of the lead acid storage battery which is used under the PSOC. The reason why the life of the lead acid storage battery which is used under the PSOC is shortened is considered to be because, when the charge and discharge are repeated in a state in which the charge is insufficient, the lead sulfate is coarsened wherein the lead sulfate is formed in the negative electrode (negative electrode plate and the like) at the time of discharge, and the lead sulfate resists returning to a spongy metallic lead which is a charge product.

The total mass of oxygen and silicon in the separator is preferably 30 to 80 mass%, based on the total mass of carbon, oxygen and silicon, in an elemental analysis according to energy dispersive X-ray spectrometry (EDX). In this case, short circuit-suppressing effect is further excellent, and also it is possible to improve the strength of the separator.

The concentration of the aluminum ion in the electrolytic solution is preferably 0.01 to 0.3 mol/L. In this case, short circuit-suppressing effect and suppressing effect on the liquid reduction of the electrolytic solution are further excellent, and also it is possible to further improve the battery characteristics such as the charge acceptability.

The electrolytic solution preferably further contains sodium ion. The concentration of sodium ion in the electrolytic

solution is preferably more than 0.05 mol/L. In these cases, suppressing effect on the liquid reduction of the electrolytic solution is further excellent.

The separator may have a first rib, and a base portion which supports the first rib. The height H of the first rib is preferably 0.9 mm or less. The ratio H/T of the height H of the first rib to the thickness T of the base portion is preferably 3.5 or less. The upper bottom width B of the first rib is preferably 0.35 mm or more. The ratio B/A of the upper bottom width B of the first rib to the lower bottom width A of the first rib is preferably 0.45 to 0.55.

The lead acid storage battery of the present invention may have an aspect in which the separator is an elongated separator further having a second rib, the base portion supports the second rib, the first rib and the second rib extend in the longitudinal direction of the separator, each of both end portions in the transverse direction of the separator includes 10 to 40 of the second ribs, and a region between both of the ends includes the first rib.

The separator may have a sack shape wrapping at least one electrode of the positive electrode and the negative electrode.

The lead acid storage battery of the present invention may have a nonwoven fabric between the positive electrode and the negative electrode. The lead acid storage battery has the nonwoven fabric between the positive electrode and the negative electrode, and thereby suppressing effect on the liquid reduction of the electrolytic solution is further excellent. The nonwoven fabric preferably includes at least one selected from the group consisting of an organic fiber, a glass fiber and pulp, in view of the further excellent stratification-suppressing effect.

**Advantageous Effects of Invention**

According to the present invention, it is possible to provide a lead acid storage battery which is excellent in short circuit-suppressing effect even when the separator containing the silica is used, and which is excellent in suppressing effect on the liquid reduction of the electrolytic solution. In addition, according to the lead acid storage battery of the present invention, it is possible to obtain excellent battery characteristics (for example, charge acceptability) while suppressing the short circuit. Furthermore, according to the lead acid storage battery of the present invention, it is possible to balance the excellent charge acceptability with other excellent battery characteristics (discharge characteristics, cycle characteristics and the like). The lead acid storage battery of the present invention can be suitably used in automobiles such as ISS vehicles and micro-hybrid vehicles as a liquid type lead acid storage battery which is intermittently charged and is discharged with a high rate under the PSOC. According to the present invention, it is possible to provide an application of the lead acid storage battery to the micro-hybrid vehicle. According to the present invention, it is possible to provide the application of the lead acid storage battery to the ISS vehicle.

**Brief Description of Drawings**

Figure 1 is a view showing a separator.
Figure 2 is a cross-sectional view of the separator and electrodes.
Figure 3 is a view showing a sack-shaped separator and an electrode accommodated in the sack-shaped separator.
Figure 4 is a cross-sectional view showing one example of a layered structure of the electrode, the separator and a nonwoven fabric.

**Description of Embodiments**

Embodiments of the present invention will be described in detail below. The specific gravity varies depending on a temperature, and accordingly is defined as a specific gravity which is converted to that at 20°C, in the present specification. In addition, in the present specification, "silica" means silicon dioxide ($SiO_2$), or a general term of substances composed of silicon dioxide.

<Lead acid storage battery>

The lead acid storage battery of the present embodiment comprises a positive electrode (positive electrode plate and the like) and a negative electrode (negative electrode plate and the like) which face each other via a separator, and an electrolytic solution (sulfuric acid and the like), wherein the separator contains polyolefin and silica, and the electrolytic solution contains an aluminum ion.

The lead acid storage battery of the present embodiment comprises, for example, a battery case, an electrode (electrode plate and the like), an electrolytic solution (sulfuric acid and the like) and a separator, and has the positive electrode and the negative electrode as the electrodes. The electrode, the electrolytic solution and the separator are

accommodated in the battery case. Examples of the lead acid storage battery of the present embodiment include a liquid type lead acid storage battery, and a control valve type lead acid storage battery; and the liquid type lead acid storage battery is preferable.

The positive electrode and the negative electrode are layered via the separator to form an electrode group (polar plate group and the like). The positive electrode has a current collector (positive electrode collector), and a positive electrode material that is supported by the current collector. The negative electrode has a current collector (negative electrode collector), and a negative electrode material that is supported by the current collector. In the present embodiment, for example, the positive electrode material and the negative electrode material are electrode materials after formation. When the electrode materials are unformed, the electrode materials (unformed positive electrode material and unformed negative electrode material) contain its own raw material and the like. The current collector constitutes an electrically-conducting path of the electric current from the electrode material. As for a basic structure of the lead acid storage battery, a similar structure to that of a conventional lead acid storage battery can be used.

(Separator)

The separator is a member that blocks electric connection between the positive electrode and the negative electrode, and permeates a sulfate ion of the electrolytic solution therethrough. The separator contains a polyolefin and silica. The separator is preferably composed of a material which contains polyolefins and silica as main components (where the content (total amount) of polyolefins and silica is, for example, 50 mass% or more based on the total mass of separator). As for the polyolefins, for example, it is possible to use homopolymers or copolymers of ethylene, propylene, butene, methylpentene and the like, or a mixture thereof. Examples of the above described homopolymer include polyethylene, polypropylene, polybutene, and polymethylpentene. Among these, the polyethylene is preferable, in view of the excellent formability and the excellent economic efficiency. The polyethylene has a lower melt molding temperature than that of the polypropylene, and shows better productivity.

The weight average molecular weight of the polyolefin is preferably 500000 or more, and more preferably 1000000 or more, in view of the excellent mechanical strength of the separator. The upper limit of the weight average molecular weight is not limited in particular, but 5000000 or less is preferable, in view of practical use. The weight average molecular weight of the polyolefin can be measured, for example, by a high temperature GPC apparatus and with the use of toluene or xylene as an eluent.

In the present embodiment, it is preferable to use a silica particle as silica. The silica particle is preferably the particle of which the particle size is small and which has a pore structure in the inside and/or on the surface. The specific surface area of the silica particle is preferably 100 $m^2/g$ or more. When the specific surface area is 100 $m^2/g$ or more, the separator has the pore structure further refined (densified) and complicated to further enhance the short circuit resistance and enhance a retentive power for the electrolytic solution; and the powder body has a large number of hydrophilic groups (-OH and the like) provided on the surface to thereby be capable of further enhancing the hydrophilicity of the separator. In addition, the specific surface area of the silica particle is preferably 400 $m^2/g$ or less, in view of enabling the silica particles uniformly dispersed in the separator. From these viewpoints, the specific surface area of the silica particle is preferably 100 to 400 $m^2/g$. The specific surface area of the silica particle can be measured, for example, according to the BET method.

The number of the silica particles having a particle size (longest size) of 2 $\mu m$ or more in the separator is preferably 20 pieces or less in a range of 30 $\mu m \times 40$ $\mu m$ which has been arbitrarily selected when the cross section of the separator is analyzed by a scanning electron microscope (SEM), and is more preferably 10 pieces or less, in view of the excellent uniformity of the separator strength.

In the elemental analysis by energy dispersive X-ray spectrometry (EDX), the total mass of oxygen and silicon (silicon) in the separator is preferably in the following ranges, based on the total mass of carbon, oxygen and silicon in the separator, in view of the further excellent short circuit-suppressing effect and in view of improving the separator strength. The total mass of oxygen and silicon is preferably 30 mass% or more, more preferably 40 mass% or more, and further preferably 50 mass% or more. The total mass of oxygen and silicon may be 55% mass% or more, and may be 60 mass% or more. The total mass of oxygen and silicon is preferably 80 mass% or less, more preferably 75 mass% or less, and further preferably 70 mass% or less. The total mass of oxygen and silicon may be 65 mass% or less. The total mass of oxygen and silicon is preferably 30 to 80 mass%, more preferably 40 to 75 mass%, and further preferably 50 to 70 mass%. The total mass of oxygen and silicon may be 55 to 75 mass%, and may be 60 to 65 mass%.

The masses of carbon, oxygen and silicon in the separator can be determined, for example, by analyzing the cross section of the separator with energy dispersive X-ray spectrometry (EDX). Specifically, the total mass of oxygen and silicon is preferably in the above described range, based on the total mass of carbon, oxygen and silicon which are detected when the cross section of the separator is analyzed by the EDX.

The separator of the present embodiment can be obtained, for example, by melt-kneading a raw material composition that contains polyolefins, silica and a plasticizer as main components; and forming into a sheet-like article

having a predetermined shape.

As for the plasticizers, for example, it is possible to use mineral oil such as industrial lubricating oil which consists of saturated hydrocarbon (paraffin); a higher alcohol such as stearyl alcohol; and an ester-based plasticizer such as dioctyl phthalate and the like. Among them, mineral oil is preferable because of being easily recycled. An amount of the plasticizer blended in the raw material composition that contains the polyolefins, the silica and the plasticizer as main components is preferably 30 to 70 mass%, based on the total amount of the raw material composition.

The plasticizer is removed after the raw material composition that contains the polyolefins, the silica and the plasticizer as main components has been melt-kneaded and formed into the sheet-like article having the predetermined shape, for example, by a method of extraction removal using a solvent, or the like. By removing the plasticizer, it can be made porous, but the separator for the lead acid storage battery can improve oxidation resistance by containing an appropriate amount of the plasticizer. The content of the plasticizer in the separator is preferably 5 to 30 mass% based on the total mass of the separator.

As for a solvent which is used for extracting and removing the plasticizer, for example, it is possible to use a saturated hydrocarbon-based organic solvent such as hexane, heptane, octane, nonane and decane.

In addition, the separator may contain an additive such as a surface active agent (hydrophilizing agent), an antioxidant, an ultraviolet absorbing agent, a weather-proof agent, a lubricant, an antibacterial agent, a mildewproofing agent, a pigment, a dye, a coloring agent, an antifogging agent and a matting agent, as needed, in a range that does not impair the object and the effect of the present invention.

The separator preferably has a first rib, and a base portion that supports the first rib, and more preferably further has a second rib supported by the base portion. The first rib and the second rib have, for example, convex shapes. The separator is, for example, an elongated member, and the first rib and the second rib extend, for example, in the longitudinal direction of the separator. The height and/or width of the first rib is more than those of the second rib, for example. The lead acid storage battery of the present embodiment may have an aspect in which it has a first region including the first rib and a second region including the second rib, each of both ends (one end and the other end, in other words, two second regions) in the transverse direction of the separator (direction orthogonal to the longitudinal direction, in other words, width direction) contains the second rib, and the region (first region) between the above described both ends contains the first rib. One embodiment of the separator of the present embodiment will be described below with reference to Figures 1 to 3.

Figure 1(a) is a front view showing a separator; and Figure 1(b) is a cross-sectional view of the separator. Figure 2 is a cross-sectional view of the separator and electrodes. As shown in Figure 1, the separator 10 has a flat base portion 11, a plurality of convex ribs (first ribs) 12, and a plurality of convex mini ribs (second ribs) 13. The base portion 11 supports the ribs 12 and the mini ribs 13. The plurality (large number) of ribs 12 are arranged in the middle (first region) in the width direction of the separator 10, in such a way as to extend in the longitudinal direction of the separator 10. The plurality of ribs 12 are arranged in such a way as to be approximately parallel to each other on one surface 10a of the separator 10. The interval between the ribs 12 is, for example, 3 to 15 mm. One end in a height direction of the rib 12 is integrated with the base portion 11, and the other end in the height direction of the rib 12 comes in contact with one electrode 14a out of the positive electrode and the negative electrode (see Figure 2). The base portion 11 faces the electrode 14a in the height direction of the rib 12. The rib is not arranged on the other surface 10b of the separator 10, and the other surface 10b of the separator 10 faces or comes in contact with the other electrode 14b (see Figure 2) out of the positive electrode and the negative electrode.

A plurality (large number) of mini ribs 13 are arranged on both sides (both ends, in other words, two second regions) in the width direction of the separator 10, in such a way as to extend in the longitudinal direction of the separator 10. The mini rib 13 has a function of improving the separator strength in order to prevent a corner of the electrode from breaking through the separator and causing a short circuit, when the lead acid storage battery vibrates in a transverse direction.

The number of the mini ribs 13 is preferably 10 or more, and more preferably 20 or more, from the viewpoint that the end of the separator resists being wrinkled when the separator is wound up and the productivity is excellent, and from the viewpoint that the strength for preventing the short circuit is easily improved. The number of the mini ribs 13 is preferably 40 or less, in view of easily forming the separator into a sack shape. From these viewpoints, the number of mini ribs 13 is preferably 10 to 40, and more preferably 20 to 40. In the case where the mini ribs are arranged in both ends in the transverse direction of the separator, the number of the mini ribs 13 is, for example, the number of the mini ribs which are arranged in each of both end portions.

Any of the height, the width and the interval of the mini ribs 13 is preferably smaller than those of the ribs 12. The cross-sectional shape of the mini rib 13 may be identical to or may also be different from that of the rib 12. The cross-sectional shape of the mini rib 13 is preferably semicircular. In addition, the mini rib 13 does not need to be arranged in the separator 10.

The upper limit of the thickness T of the base portion 11 is preferably 0.4 mm or less, more preferably 0.3 mm or less, further preferably 0.25 mm or less, particularly preferably less than 0.25 mm, extremely preferably 0.225 mm or

less, and very preferably 0.2 mm or less, in view of obtaining the further excellent charge acceptability and the further excellent discharge characteristics. The lower limit of the thickness T of the base portion 11 is not limited in particular, but is preferably 0.05 mm or more, and more preferably 0.1 mm or more, in view of the further excellent short circuit-suppressing effect.

The upper limit of the height H (height in direction in which base portion 11 faces electrode 14) of the rib 12 is preferably 1 mm or less, more preferably 0.9 mm or less, and further preferably 0.8 mm or less, and particularly preferably 0.6 mm or less, in view of obtaining the further excellent charge acceptability. The lower limit of the height H of the rib 12 is preferably 0.3 mm or more, more preferably 0.4 mm or more, and further preferably 0.5 mm or more, in view of suppressing the oxidative deterioration of the positive electrode. From these viewpoints, the height H of the rib 12 is preferably 0.3 to 1 mm, more preferably 0.3 to 0.9 mm, further preferably 0.3 to 0.8 mm, particularly preferably 0.4 to 0.8 mm, and extremely preferably 0.5 to 0.6 mm.

The lower limit of the ratio H/T of the height H of the rib 12 to the thickness T of the base portion 11 is preferably 2 or more, in view of the excellent oxidation resistance. When the ratio H/T is 2 or more, it is inferred that the oxidation resistance of the separator improves, because it is possible to sufficiently secure a portion which does not come in contact with an electrode (for example, positive electrode). The lower limit of the ratio H/T is more preferably 2.3 or more, and further preferably 2.5 or more, in view of the excellent oxidation resistance and the excellent productivity of the separator.

The upper limit of the ratio H/T is preferably 6 or less, in view of the excellent shape retentivity of the rib and in view of the further excellent short circuit-suppressing effect. When the ratio H/T is 6 or less, it is inferred that the short circuit is further suppressed because a distance between the positive electrode and the negative electrode is enough. In addition, when the ratio H/T is 6 or less, it is inferred that the rib is not damaged when the lead acid storage battery is assembled, and the battery characteristics such as charge acceptability are adequately maintained. The upper limit of the ratio H/T is more preferably 5 or less, further preferably 4 or less, particularly preferably 3.7 or less, extremely preferably 3.5 or less, and very preferably 3 or less, in view of the further excellent short circuit-suppressing effect and in view of excellent shape retentivity of the rib.

From the above described viewpoints, the ratio H/T is preferably 2 to 6, more preferably 2.3 to 5, further preferably 2.3 to 4, particularly preferably 2.3 to 3.7, extremely preferably 2.3 to 3.5, and very preferably 2.5 to 3.

An upper bottom width B of the rib 12 (see Figure 1(b)) is preferably 0.1 mm or more, more preferably 0.2 mm or more, further preferably 0.3 mm or more, and particularly preferably 0.35 mm or more, in view of the excellent shape retentivity of the rib and the excellent oxidation resistance. From similar viewpoints, the upper bottom width B of the rib 12 is preferably 2 mm or less, more preferably 1 mm or less, further preferably 0.8 mm or less, and particularly preferably 0.5 mm or less. From these viewpoints, the upper bottom width B of the rib 12 is preferably 0.1 to 2 mm, more preferably 0.2 to 2 mm, further preferably 0.3 to 2 mm, particularly preferably 0.35 to 2 mm, extremely preferably 0.35 to 1 mm, very preferably 0.35 to 0.8 mm, and still further preferably 0.35 to 0.5 mm. The upper bottom width B of the rib 12 may be 0.2 to 1 mm, or may be 0.2 to 0.8 mm.

A lower bottom width A of the rib is preferably 0.2 mm or more, more preferably 0.3 mm or more, further preferably 0.4 mm or more, particularly preferably 0.5 mm or more, and extremely preferably 0.7 mm or more, in view of the excellent shape retentivity of the rib. From a similar viewpoint, the lower bottom width A of the rib is preferably 4 mm or less, more preferably 2 mm or less, and further preferably 1 mm or less. From these viewpoints, the lower bottom width A of the rib is preferably 0.2 to 4 mm, more preferably 0.3 to 2 mm, further preferably 0.4 to 1 mm, particularly preferably 0.5 to 1 mm, and extremely preferably 0.7 to 1 mm.

A ratio B/A of the upper bottom width B to the lower bottom width A is preferably 0.1 or more, more preferably 0.2 or more, further preferably 0.3 or more, particularly preferably 0.4 or more, and extremely preferably 0.45 or more, in view of the excellent shape retentivity of the rib. From a similar viewpoint, the ratio B/A is preferably 1 or less, more preferably 0.8 or less, further preferably 0.6 or less, and particularly preferably 0.55 or less. From these viewpoints, the ratio B/A is preferably 0.1 to 1, more preferably 0.2 to 0.8, further preferably 0.3 to 0.6, particularly preferably 0.4 to 0.55, and extremely preferably 0.45 to 0.55.

The separator 10 preferably has a sack shape wrapping at least one electrode of the positive electrode and the negative electrode therein. For example, preferable is an aspect in which one of the positive electrode and the negative electrode is accommodated in the sack-shaped separator, and is alternately layered on the other out of the positive electrode and the negative electrode. When the sack-shaped separator is applied to the positive electrode, for example, there is a possibility that the positive electrode penetrates the separator by the extension of the positive electrode current collector; and accordingly the negative electrode is preferably accommodated in the sack-shaped separator.

Usable materials for the separator 10 include a microporous polyethylene sheet; and a laminate of glass fibers and an acid resistant paper. The separator 10 is preferably cut so as to match the length of the negative electrode (negative electrode plate and the like), in the step of layering the electrodes (polar plates and the like). In addition, the above described cut separator 10 may have a form in which the separator 10 is folded in two, and then both sides have

been crimped, thereby wraps the negative electrode therein.

Figure 3 is a view showing a sack-shaped separator 20, and an electrode (for example, negative electrode) 14 accommodated in the separator 20. As shown in Figure 1(a), the separator 10 which is used in the production of the separator 20 is formed, for example, in the shape of an elongated sheet. The separator 20 shown in Figure 3 is obtained by cutting the separator 10 to an appropriate length; folding the separator into two in the longitudinal direction of the separator 10; arranging the electrode 14 in the inside; overlapping the separator 10; and mechanically sealing, crimping or thermally bonding both of the side portions (for example, reference numeral 22 in Figure 3 indicates mechanically sealed portion).

(Nonwoven fabric)

The lead acid storage battery of the present embodiment may have a nonwoven fabric between the positive electrode and the negative electrode. Thereby, the separator is further excellent in suppressing effect on the liquid reduction of the electrolytic solution. The factor for the further excellent suppressing effect on the liquid reduction of the electrolytic solution is unclear, but it is inferred as follows.

When the nonwoven fabric exists between the positive electrode and the negative electrode, a gas generated by overcharge is captured in the nonwoven fabric, and the gas results in existing in the interface between the active material and the electrolytic solution. As a result, the area of the interface between the active material and the electrolytic solution decreases, and the overpotential for the gas generation increases. It is inferred that thereby the liquid reduction of the electrolytic solution tends to be easily suppressed.

The nonwoven fabric may be arranged between the negative electrode and the separator, or may be arranged between the positive electrode and the separator. By arranging the nonwoven fabric between the negative electrode and the separator, it is possible to further suppress the stratification. The nonwoven fabric is preferably arranged so as to come in contact with an electrode (negative electrode or positive electrode). The nonwoven fabric may be arranged inside a sack-shaped separator.

Figure 4 is a cross-sectional view showing one example of a layered structure of the electrodes, the separators, and the nonwoven fabrics. In Figure 4, one electrode 14a and the other electrode 14b out of the positive electrode and the negative electrode are alternately layered via the separator 10 and the nonwoven fabric 30. The nonwoven fabric 30 and the electrode 14b can be accommodated in the sack-shaped separator 10 by overlapping the separator 10 and the nonwoven fabric 30 to obtain an elongated layered sheet; and then arranging the electrode 14b in the space formed by bending the layered sheet in the longitudinal direction thereof at the middle of the longitudinal direction; and bonding the sheets on ends of both sides to each other, which are adjacent to the bent portion. The electrode 14b is, for example, the negative electrode.

The constituent material of the nonwoven fabric is not limited in particular as long as the constituent material is resistant to the electrolytic solution. Specific examples of the constituent material of the nonwoven fabric include an organic fiber, an inorganic fiber, pulp and inorganic oxide powder. Examples of the organic fiber include polyolefin fibers (polyethylene fiber, polypropylene fiber or the like), and polyethylene terephthalate fiber. Examples of the inorganic fiber include a glass fiber and the like. The nonwoven fabric preferably contains at least one selected from the group consisting of an organic fiber, a glass fiber and pulp, in view of the further excellent stratification-suppressing effect. As the constituent material of the nonwoven fabric, a mixed fiber containing an inorganic fiber and pulp may be used, and an organic/inorganic mixed fiber containing an organic fiber and an inorganic fiber may also be used.

The thickness of the nonwoven fabric is preferably 0.03 mm or more, and more preferably 0.1 mm or more, in view of the further excellent stratification-suppressing effect and in view of improving the strength of the nonwoven fabric. The thickness of the nonwoven fabric is preferably 0.4 mm or less, and more preferably 0.3 mm or less, in view of easily suppressing an increase in internal resistance.

In the lead acid storage battery of the present embodiment, the nonwoven fabric may not be used. In this case, it is suppressed that diffusion of a sulfate ion is shielded by the nonwoven fabric, and accordingly it tends to easily obtain excellent charge acceptability.

(Electrolytic solution)

The electrolytic solution of the lead acid storage battery of the present embodiment contains an aluminum ion. By the electrolytic solution containing the aluminum ion, it is possible to obtain the excellent short circuit-suppressing effect even when the separator containing silica is used. In addition, due to the electrolytic solution containing the aluminum ion, it is possible to obtain the excellent suppressing effect on the liquid reduction of the electrolytic solution.

The reason why the short circuit tends to easily occur when the separator containing the silica is used and the reason why the electrolytic solution containing the aluminum ion can suppress the occurrence of the short circuit are unclear, but the present inventors infer as follows.

Firstly, the positive electrode side tends to form an alkaline atmosphere when the discharge reaction occurs, and in the case where an aluminum ion does not exist in the electrolytic solution, the silica becomes easy to dissolve when it becomes alkaline. It is inferred that, if the silica dissolves, the separator shrinks to decrease the thickness of the separator, and consequently the short circuit tends to easily occur. It is also inferred that, when the pH increases (when pH shifts to alkaline side) because of the consumption of a hydrogen ion due to the discharge reaction at the positive electrode, the solubility of lead sulfate increases in the positive electrode, the deposit of the lead sulfate tends to easily occur in the inside of the separator because of a difference between this solubility and a solubility of the lead sulfate at the time when the pH lowers (when pH shifts to acidic side) during charging, and the short circuit accelerates.

On the other hand, in the present embodiment, the electrolytic solution contains an aluminum ion, and thereby an aluminum compound such as aluminum hydroxide precipitates inside the separator at the time of discharge. As in the above way, the aluminum compound such as aluminum hydroxide precipitates, and thereby the dissolution of silica is suppressed, which consequently can keep the thickness of the separator. In addition, the precipitation reaction of the aluminum compound such as the aluminum hydroxide can alleviate an increase in the pH of the electrolytic solution (shift of pH to alkaline side), and accordingly the increase in the solubility of the lead sulfate can be suppressed. It is inferred that for these reasons, the existence of the aluminum ion in the electrolytic solution can suppress the short circuit.

In addition, the reason why the liquid reduction of the electrolytic solution can be suppressed by the electrolytic solution containing an aluminum ion is unclear, but the present inventors infer as follows.

In the case where the electrolytic solution does not contain an aluminum ion, when large-current charging is repeated and thereby electrolysis of water in the electrolytic solution occurs, hydrogen gas is generated due to a hydrogen ion existing in the vicinity of the negative electrode, the hydrogen gas is discharged to the outside of the battery, and consequently water in the electrolytic solution tends to easily decrease. In contrast to this, in the case where the electrolytic solution contains an aluminum ion, not only a hydrogen ion but also an aluminum ion move to the vicinity of the negative electrode during charging. Due to the influence of this aluminum ion, the number of a hydrogen ion existing in the vicinity of the negative electrode decreases, accordingly the reaction potential falls, and the hydrogen generation overpotential increases. It is inferred that for this reason, the existence of an aluminum ion in the electrolytic solution can suppress the liquid reduction of the electrolytic solution.

The aluminum ion concentration of the electrolytic solution is preferably 0.01 mol/L or more, more preferably 0.02 mol/L or more, and further preferably 0.05 mol/L or more, based on the total amount of the electrolytic solution, in view of the further excellent short circuit-suppressing effect and the further excellent suppressing effect on the liquid reduction of the electrolytic solution, and in view of further improving the battery characteristics such as the charge acceptability. From a similar viewpoint, the aluminum ion concentration of the electrolytic solution may be 0.08 mol/L or more, 0.1 mol/L or more, 0.12 mol/L or more, 0.14 mol/L or more, and 0.15 mol/L or more. The aluminum ion concentration of the electrolytic solution is preferably 0.3 mol/L or less, more preferably 0.25 mol/L or less, and further preferably 0.2 mol/L or less, based on the total amount of the electrolytic solution, in view of the further excellent short circuit-suppressing effect and the further excellent suppressing effect on the liquid reduction of the electrolytic solution, and in view of further improving the charge acceptability and the cycle characteristics. From these viewpoints, the aluminum ion concentration of the electrolytic solution is preferably 0.01 to 0.3 mol/L, more preferably 0.02 to 0.25 mol/L, and further preferably 0.05 to 0.2 mol/L, based on the total amount of the electrolytic solution. From similar viewpoints, the aluminum ion concentration of the electrolytic solution may be 0.08 to 0.2 mol/L, may be 0.1 to 0.2 mol/L, may be 0.12 to 0.2 mol/L, may be 0.14 to 0.2 mol/L and may be 0.15 to 0.2 mol/L. The aluminum ion concentration of the electrolytic solution can be measured, for example, by ICP emission spectroscopy (high frequency induction coupled plasma emission spectroscopy).

It is inferred that the mechanism by which the short circuit-suppressing effect is further excellent due to the aluminum ion concentration of the electrolytic solution being set in the above described predetermined range is as described in the above in regard to the use of the aluminum ion. The details of a mechanism by which the charge acceptability is improved are unclear, but the mechanism is inferred as follows. Specifically, it is inferred that, when the aluminum ion concentration is in the above described predetermined range, a solubility of the crystalline lead sulfate, which is a discharge product, into the electrolytic solution increases, or a diffusibility of the electrolytic solution into the electrode active material improves due to a high ion conductivity of the aluminum ion, under arbitrary low SOC, and accordingly that the charge acceptability improves.

The electrolytic solution contains, for example, an aluminum ion and sulfuric acid. The electrolytic solution may further contain an ion other than the aluminum ion (sodium ion, potassium ion, phosphate ion or the like). The electrolytic solution preferably contains a sodium ion, in view of the further excellent suppressing effect on the liquid reduction of the electrolytic solution.

In the case where the electrolytic solution contains a sodium ion, the sodium ion concentration of the electrolytic solution is preferably 0.04 mol/L or more, more preferably 0.05 mol/L or more, further preferably more than 0.05 mol/L, particularly preferably 0.055 mol/L or more, and extremely preferably 0.06 mol/L or more, based on the total amount of the electrolytic solution, in view of the further excellent suppressing effect on the liquid reduction of the electrolytic solution. The sodium ion concentration of the electrolytic solution is preferably 1.00 mol/L or less, more preferably 0.09

mol/L or less, further preferably 0.08 mol/L or less, and particularly preferably 0.07 mol/L or less, based on the total amount of the electrolytic solution, in view of the further excellent suppressing effect on the liquid reduction of the electrolytic solution. From these viewpoints, the sodium ion concentration of the electrolytic solution is preferably 0.04 to 1.00 mol/L, more preferably 0.05 to 0.09 mol/L, further preferably more than 0.05 to 0.08 mol/L or less, particularly preferably 0.055 to 0.07 mol/L, and extremely preferably 0.06 to 0.07 mol/L, based on the total amount of the electrolytic solution. The sodium ion concentration of the electrolytic solution can be measured, for example, by ICP emission spectroscopy (high frequency induction coupled plasma emission spectroscopy).

(Positive electrode material)

[Positive electrode active material]

The positive electrode material contains a positive electrode active material. The positive electrode active material can be obtained by aging and drying a positive electrode material paste containing a raw material of the positive electrode active material to obtain an unformed positive electrode active material; and then forming the unformed positive electrode active material. The positive electrode active material after the formation preferably contains β-lead dioxide (β-$PbO_2$), and also may further contain α-lead dioxide (α-$PbO_2$). The raw material of the positive electrode active material is not limited in particular, and examples include lead powder. Examples of the lead powder include lead powder (for example, mixture of main component PbO powder and scaly metallic lead, in ball mill type lead powder producing machine) which is produced, for example, by a ball mill type lead powder producing machine or a Burton-pot type lead powder producing machine. Red lead ($Pb_3O_4$) may be used as the raw material of the positive electrode active material. The unformed positive electrode material preferably contains an unformed positive electrode active material containing a tribasic lead sulfate, as a main component.

The average particle size of the positive electrode active material is preferably 0.3 μm or more, more preferably 0.5 μm or more, and further preferably 0.7 μm or more, in view of further improving the charge acceptability and the cycle characteristics. The average particle size of the positive electrode active material is preferably 2.5 μm or less, more preferably 2 μm or less, and further preferably 1.5 μm or less, in view of further improving the cycle characteristics. The above described average particle size of the positive electrode active material is an average particle size of a positive electrode active material in a positive electrode material after the formation. For example, the average particle size of the positive electrode active material can be obtained as a numerical value which is obtained by arithmetically averaging the values of long-side lengths (maximum particle sizes) of all the active material particles in a range of 10 μm in length × 10 μm in width, in an image of a scanning electron microscopic photograph (1000 magnifications) for the positive electrode material in the central portion of the positive electrode after the formation.

The content of the positive electrode active material is preferably 95 mass% or more, more preferably 97 mass% or more, and further preferably 99 mass% or more, based on the total mass of the positive electrode material, in view of the further excellent battery characteristics (capacity, low-temperature high-rate discharge performance, charge acceptability, cycle characteristics and the like). The upper limit of the content of the positive electrode active material may be 100 mass% or less. The above described content of the positive electrode active material is a content of the positive electrode active material in the positive electrode material after the formation.

[Positive electrode additive]

The positive electrode material may further contain an additive. Examples of the additive include a carbon material (carbonaceous conductive material. Carbon fiber is excluded), and short fiber for reinforcement. Examples of the carbon material include carbon black and graphite. Examples of the carbon black include furnace black (Ketchen black and the like), channel black, acetylene black and thermal black. Examples of the short fiber for reinforcement include acrylic fiber, polyethylene fiber, polypropylene fiber, polyethylene terephthalate fiber and carbon fiber.

[Physical properties of positive electrode material]

The lower limit of the specific surface area of the positive electrode material is preferably 3 $m^2/g$ or more, more preferably 4 $m^2/g$ or more, and further preferably 5 $m^2/g$ or more, in view of the further excellent charge acceptability. The upper limit of the specific surface area of the positive electrode material is not limited in particular, but is preferably 15 $m^2/g$ or less, more preferably 13 $m^2/g$ or less, and further preferably 12 $m^2/g$ or less, in view of practical use and in view of making the utilization rate excellent. The above described specific surface area of the positive electrode material is a specific surface area of the positive electrode material after the formation. The specific surface area of the positive electrode material can be adjusted, for example, by a method of adjusting amounts of sulfuric acid and water added when the positive electrode material paste is produced, a method of refining the active material at a stage where the

positive electrode active material is unformed, a method of changing a formation condition, and the like.

The specific surface area of the positive electrode material can be measured, for example, by a BET method. The BET method is a method of making the surface of a measurement sample adsorb an inert gas of which one molecule size is known (for example, nitrogen gas), and determining the surface area from the amount adsorbed and the occupying area of the inert gas; and is a general measurement method of the specific surface area. Specifically, the measurement is performed on the basis of the following BET equation.

The relational expression of the following expression (1) holds well when $P/P_o$ is in a range of 0.05 to 0.35. In the expression (1), the details of each symbol are as follows.

P: adsorption equilibrium pressure in adsorption equilibrium state at certain temperature
$P_o$: saturated vapor pressure at adsorption temperature
V: amount adsorbed at adsorption equilibrium pressure P
$V_m$: amount of monomolecular layer adsorbed (amount adsorbed when gas molecules have formed monomolecular layer on solid surface)
C: BET constant (parameter relating to interaction between solid surface and adsorbed substance)
[Expression 1]

$$\frac{P}{V(P_0 - P)} = \left(\frac{C-1}{V_m C}\right)\left(\frac{P}{P_0}\right) + \frac{1}{V_m C} \qquad \cdots (1)$$

The following expression (2) is obtained by modifying the expression (1) (dividing numerator and denominator on left side by P). The specific surface area meter that is used for the measurement makes a gas molecule of which the adsorption occupying area is known adsorbed onto the sample and measures a relation between the amount adsorbed (V) and the relative pressure ($P/P_o$). On the basis of the measured V and $P/P_o$, the left side of the expression (2) and P/Po are plotted. Here, assuming that the gradient is s, the following expression (3) is derived from the expression (2). Assuming that the intercept is i, the intercept i and the gradient s are given by the following expressions (4) and (5), respectively.

[Expression 2]

$$\frac{1}{V\left(\frac{P_0}{P} - 1\right)} = \left(\frac{C-1}{V_m C}\right)\left(\frac{P}{P_0}\right) + \frac{1}{V_m C} \qquad \cdots (2)$$

[Expression 3]

$$s = \frac{C-1}{V_m C} = \frac{C}{V_m C} - \frac{1}{V_m C} = \frac{1}{V_m} - \frac{1}{V_m C} \qquad \cdots (3)$$

[Expression 4]

$$i = \frac{1}{V_m C} \qquad \cdots (4)$$

[Expression 5]

[Expression 5]

$$s = \frac{1}{V_m} - i \quad \cdots (5)$$

When the expressions (4) and (5) are modified, the following expressions (6) and (7) are obtained, respectively, and the following expression (8) is obtained which determines the amount Vm of the monomolecular layer adsorbed. Specifically, several points of the amount adsorbed V are measured at a certain relative pressure $P/P_o$ to determine the gradient and intercept of the plot, and the amount Vm of the monomolecular layer adsorbed is determined.

[Expression 6]

$$s \times V_m = 1 - i \times V_m \quad \cdots (6)$$

[Expression 7]

$$(s + i)V_m = 1 \quad \cdots (7)$$

[Expression 8]

$$V_m = \frac{1}{s + i} \quad \cdots (8)$$

The total surface area $S_{total}$ ($m^2$) of the sample is determined by the following expression (9), and the specific surface area S ($m^2/g$) is determined by the following expression (10) on the basis of the total surface area $S_{total}$. In the expression (9), N represents an Avogadro's number, $A_{CS}$ represents an adsorption cross-sectional area ($m^2$), and M represents a molecular weight. In addition, in the expression (10), w represents the quantity (g) of the sample.

[Expression 9]

$$S_{total} = (V_m \times N \times A_{cs})M \quad \cdots (9)$$

[Expression 10]

$$S = \frac{S_{total}}{w} \quad \cdots (10)$$

The porosity of the positive electrode material is preferably 50% by volume or more, and more preferably 55% by volume or more, from the viewpoint of increasing a region in which sulfuric acid enters a pore portion (pore) in the positive electrode material to easily increase the capacity. The upper limit of the porosity of the positive electrode material is not limited in particular, but is preferably 70% by volume or less, from the viewpoint that the amount in which the pore portion in the positive electrode material is impregnated with sulfuric acid is adequate, and a bonding force between the active materials can be adequately kept. The upper limit of the porosity is more preferably 60% by volume or less, in view of practical use. The above described porosity of the positive electrode material is a porosity of the positive electrode material after the formation. The porosity of the positive electrode material is, for example, a value (percentage based on volume) which is obtained from mercury porosimeter measurement. The porosity of the positive electrode material can be adjusted, for example, by the amount of dilute sulfuric acid added when the positive electrode material paste is prepared.

(Negative electrode material)

[Negative electrode active material]

The negative electrode material contains a negative electrode active material. The negative electrode active material can be obtained by aging and drying a negative electrode material paste containing a raw material of the negative electrode active material to obtain an unformed negative electrode active material; and then forming the unformed negative electrode active material. Examples of the negative electrode active materials after the formation include spongy lead. The above described spongy lead tends to react with sulfuric acid in the electrolytic solution and gradually turn into lead sulfate ($PbSO_4$). The raw materials of the negative electrode active material include lead powder. Examples of the lead powder include lead powder (for example, mixture of main component PbO powder and scaly metallic lead, in ball mill type lead powder producing machine) which is produced, for example, by a ball mill type lead powder producing machine or a Burton-pot type lead powder producing machine. The unformed negative electrode active material is composed of, for example, basic lead sulfate, metal lead and a low-grade oxide.

The average particle size of the negative electrode active material is preferably 0.3 μm or more, more preferably 0.5 μm or more, and further preferably 0.7 μm or more, in view of further improving the charge acceptability and the cycle characteristics. The average particle size of the negative electrode active material is preferably 2.5 μm or less, more preferably 2 μm or less, and further preferably 1.5 μm or less, in view of further improving the cycle characteristics. The above described average particle size of the negative electrode active material is an average particle size of the negative electrode active material in the negative electrode material after the formation. For example, the average particle size of the negative electrode active material can be obtained as a numerical value which is obtained by arithmetically averaging the values of long-side lengths (maximum particle size) of all the active material particles in a range of 10 μm in length × 10 μm in width, in an image of a scanning electron microscopic photograph (1000 magnifications) for the negative electrode material in the central portion of the negative electrode after the formation.

The content of the negative electrode active material is preferably 93 mass% or more, more preferably 95 mass% or more, and further preferably 98 mass% or more, based on the total mass of the negative electrode material, in view of making the battery characteristics (capacity, low-temperature high-rate discharge performance, charge acceptability, cycle characteristics and the like) further better. The upper limit of the content of the negative electrode active material may be 100 mass% or less. The above described content of the negative electrode active material is a content of a negative electrode active material in the negative electrode material after the formation.

[Negative electrode additive]

The negative electrode material may further contain an additive. Examples of additives include: a resin (resin having sulfone group and/or sulfonate group) which has at least one selected from the group consisting of a sulfone group (sulfonic acid group; sulfo group) and a sulfonate group (for example, a group formed by replacing hydrogen atom of sulfone group with alkali metal); barium sulfate; a carbon material (carbonaceous conductive material. Carbon fiber is excluded); and short fiber for reinforcement. The negative electrode material contains the resin having at least one selected from the group consisting of the sulfone group and the sulfonate group, and thereby it is possible to further improve the charge acceptability.

Examples of the resins having the sulfone group and/or sulfonate group include: a bisphenol-based resin having a sulfone group and/or a sulfonate group (hereinafter simply referred to as "bisphenol-based resin"); lignin sulfonic acid; and a lignin sulfonate. The lignin sulfonic acid is a compound in which a part of decomposed products of lignin is sulfonated. Examples of the lignin sulfonates include potassium lignin sulfonate and sodium lignin sulfonate. Among these, the bisphenol-based resin is preferable, in view of further improving the charge acceptability.

The bisphenol-based resin is preferably a resin obtained by a reaction of: a bisphenol-based compound; at least one selected from the group consisting of aminoalkylsulfonic acid, an aminoalkylsulfonic acid derivative, aminoarylsulfonic acid and an aminoarylsulfonic acid derivative; and at least one selected from the group consisting of formaldehyde and a formaldehyde derivative.

The bisphenol-based compound is a compound having two hydroxyphenyl groups. Examples of the bisphenol-based compound include 2,2-bis(4-hydroxyphenyl)propane (also referred to as "bisphenol A"), bis(4-hydroxyphenyl)methane, 1,1-bis(4-hydroxyphenyl)ethane, 2,2-bis(4-hydroxyphenyl)hexanuoropropane, 1,1-bis(4-hydroxyphenyl)-1-phenylethane, 2,2-bis(4-hydroxyphenyl)butane, bis(4-hydroxyphenyl)diphenylmethane, 1,1-bis(4-hydroxyphenyl)cyclohexane, 1,1-bis(4-hydroxyphenyl)-3,3,5-trimethylcyclohexane, and bis(4-hydroxyphenyl)sulfone (also referred to as "bisphenol S").

Examples of the aminoalkylsulfonic acid include aminomethanesulfonic acid, 2-aminoethanesulfonic acid, 3-aminopropanesulfonic acid, and 2-methylaminoethanesulfonic acid. Examples of the aminoalkylsulfonic acid derivative include a compound formed by replacing a hydrogen atom of the aminoalkylsulfonic acid with an alkyl group (for example,

alkyl group having 1 to 5 carbon atoms) or the like, and an alkali metal salt formed by replacing a hydrogen atom of a sulfonic group ($-SO_3H$) of the aminoalkylsulfonic acid with an alkali metal (for example, sodium or potassium). Examples of the aminoarylsulfonic acid include aminobenzenesulfonic acid (4-aminobenzenesulfonic acid and the like), and aminonaphthalenesulfonic acid. Examples of the aminoarylsulfonic acid derivative include a compound formed by replacing a hydrogen atom of aminoarylsulfonic acid with an alkyl group (for example, alkyl group having 1 to 5 carbon atoms) or the like, and an alkali metal salt formed by replacing a hydrogen atom of a sulfone group ($-SO_3H$) of the aminoarylsulfonic acid with an alkali metal (for example, sodium or potassium).

Examples of the formaldehyde derivative include paraformaldehyde, hexamethylenetetramine, and trioxane.

The bisphenol-based resin preferably has at least one selected from the group consisting of a structural unit represented by the following formula (I) and a structural unit represented by the following formula (II).

[Chemical Formula 1]

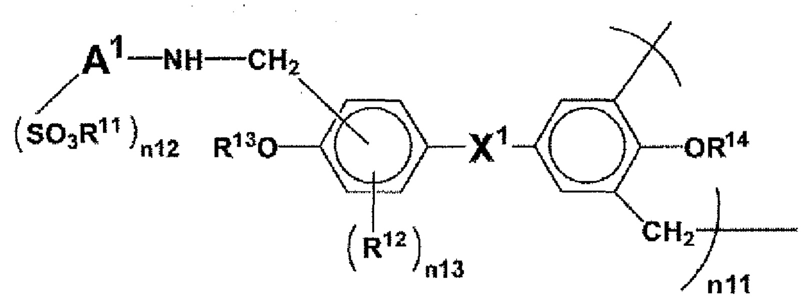

…(I)

[In the formula (I), $X^1$ represents a divalent group; $A^1$ represents an alkylene group having 1 to 4 carbon atoms or an arylene group; $R^{11}$ represents an alkali metal or a hydrogen atom; $R^{12}$ represents a methylol group ($-CH_2OH$); $R^{13}$ and $R^{14}$ each independently represents an alkali metal or a hydrogen atom; n11 represents an integer of 1 to 600; n12 represents an integer of 1 to 3; and n13 represents 0 or 1.]

[Chemical Formula 2]

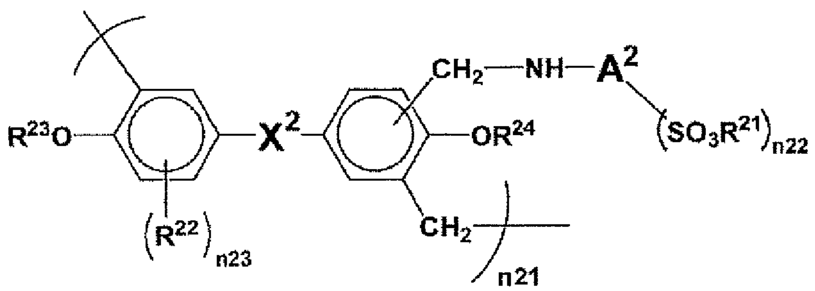

…(II)

[In the formula (II), $X^2$ represents a divalent group; $A^2$ represents an alkylene group having 1 to 4 carbon atoms or an arylene group; $R^{21}$ represents an alkali metal or a hydrogen atom; $R^{22}$ represents a methylol group ($-CH_2OH$); $R^{23}$ and $R^{24}$ each independently represents an alkali metal or a hydrogen atom; n21 represents an integer of 1 to 600; n22 represents an integer of 1 to 3; and n23 represents 0 or 1.]

A ratio between the structural unit represented by the formula (I) and the structural unit represented by the formula (II) is not limited in particular, and can vary depending on the synthetic condition or the like. A resin that has only either one of the structural unit represented by the formula (I) and the structural unit represented by the formula (II) may be used for the bisphenol-based resin.

Examples of the $X^1$ and $X^2$ include an organic group such as an alkylidene group (methylidene group, ethylidene group, isopropylidene group, sec-butylidene group and the like), a cycloalkylidene group (cyclohexylidene group and the like), and a phenylalkylidene group (diphenylmethylidene group, phenylethylidene group and the like); and a sulfonyl group: and isopropylidene group ($-C(CH_3)_2-$) is preferred in view of the further excellent charge acceptability, and sulfonyl group ($-SO_2-$) is preferred in view of the further excellent discharge characteristics. The $X^1$ and $X^2$ may be substituted with a halogen atom such as a fluorine atom. When the $X^1$ and $X^2$ are the cycloalkylidene group, the hydrocarbon ring may be substituted with an alkyl group or the like.

Examples of the $A^1$ and $A^2$ include an alkylene group having 1 to 4 carbon atoms such as a methylene group,

an ethylene group, a propylene group and a butylene group; and a divalent arylene group such as a phenylene group and a naphthylene group. The above described arylene group may be substituted with an alkyl group or the like.

Examples of alkali metals of $R^{11}$, $R^{13}$, $R^{14}$, $R^{21}$, $R^{23}$ and $R^{24}$ include sodium and potassium. n11 and n21 are preferably 5 to 300 in view of the further excellent cycle characteristics and the further excellent solubility in the solvent. n12 and n22 are preferably 1 or 2, and more preferably 1, in view of improving the charge acceptability, the discharge characteristics and the cycle characteristics in a well-balanced manner. n13 and n23 are preferably 0, though the values vary depending on the production conditions, in view of the further excellent cycle characteristics and the excellent storage stability of the bisphenol-based resin.

The weight average molecular weight of the resin (bisphenol-based resin and the like) having the sulfone group and/or the sulfonate group is preferably 3000 or more, more preferably 10000 or more, further preferably 20000 or more, and particularly preferably 30000 or more, in view of suppressing the elution of the resin having the sulfone group and/or the sulfonate group from the electrode to the electrolytic solution in the lead acid storage battery to thereby easily improve the cycle characteristics. The weight average molecular weight of the resin having the sulfone group and/or the sulfonate group is preferably 200000 or less, more preferably 150000 or less, and further preferably 100000 or less, in view of suppressing the lowering of adsorptivity to an electrode active material and the lowering of dispersibility to thereby easily improve the cycle characteristics.

The weight average molecular weight of the resin having the sulfone group and/or the sulfonate group can be measured, for example, by gel permeation chromatography (hereinafter referred to as "GPC") on the following conditions.
(GPC condition)

Apparatus: High performance liquid chromatograph LC-2200 Plus (made by JASCO Corporation)

Pump: PU-2080
Differential refractometer: RI-2031
Detector: Ultraviolet visible absorptiometer UV-2075 ($\lambda$: 254 nm)
Column oven: CO-2065

Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mM) and triethylamine (200 mM)
Flow velocity: 0.6 mL/minute
Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$ and $2.10\times10^4$, made by Tosoh Corporation), diethylene glycol (molecular weight: $1.06\times10^2$; made by Kishida Chemical Co., Ltd.), and dibutylhydroxytoluene (molecular weight: $2.20\times10^2$; made by Kishida Chemical Co., Ltd.)

When the resin having the sulfone group and/or the sulfonate group is used, the content of the resin having the sulfone group and/or the sulfonate group is preferably 0.01 mass% or more, more preferably 0.05 mass% or more, and further preferably 0.1 mass% or more in terms of a solid content of the resin, based on the total mass of the negative electrode material, in view of obtaining the further excellent charge acceptability. The content of the resin having the sulfone group and/or the sulfonate group is preferably 2 mass% or less, more preferably 1 mass% or less, and further preferably 0.3 mass% or less in terms of a solid content of the resin, based on the total mass of the negative electrode material, in view of obtaining the further excellent discharge characteristics.

Examples of the carbon material include carbon black and graphite. Examples of the carbon black include furnace black (Ketchen black and the like), channel black, acetylene black and thermal black. Examples of the short fiber for reinforcement include acrylic fiber, polyethylene fiber, polypropylene fiber, polyethylene terephthalate fiber and carbon fiber.

[Physical properties of negative electrode material]

The specific surface area of the negative electrode material is preferably 0.4 $m^2/g$ or more, more preferably 0.5 $m^2/g$ or more, and further preferably 0.6 $m^2/g$ or more, in view of enhancing the reactivity of the electrolytic solution with the negative electrode active material. The specific surface area of the negative electrode material is preferably 2 $m^2/g$ or less, more preferably 1.8 $m^2/g$ or less, and further preferably 1.5 $m^2/g$ or less, in view of further suppressing the shrinkage of the negative electrode during the cycle. The above described specific surface area of the negative electrode material is the specific surface area of the negative electrode material after the formation. The specific surface area of the negative electrode material can be adjusted, for example, by a method of adjusting the amounts of sulfuric acid and

water added when the negative electrode material paste is prepared, a method of refining the active material at a stage where the negative electrode active material is unformed, and a method of changing a formation condition. The specific surface area of the negative electrode material can be measured, for example, by the BET method.

(Current collector)

Examples of the method for producing the current collector include a casting method, an expanding method and a stamping method. Examples of the material of the current collector include a lead-calcium-tin-based alloy and a lead-antimony-based alloy. A small amount of selenium, silver, bismuth or the like can be added thereto. The current collector can be obtained, for example, by forming these materials into a grid shape or a mesh shape according to the previously described production method. The material and/or production methods of the current collectors of the positive electrode and the negative electrode may be identical to or different from each other.

<Method for producing lead acid storage battery>

The production method for the lead acid storage battery of the present embodiment comprises, for example, an electrode production step of obtaining the electrodes (positive electrode and negative electrode); and an assembling step of assembling constituent members including the above described electrodes to obtain the lead acid storage battery.

In the electrode production step, for example, an unformed electrode is obtained by: filling the current collector (cast grid body obtained according to casting method, expanded grid body obtained according to expanding method, or the like) with an electrode material paste (positive electrode material paste and negative electrode material paste); and then performing the aging and drying. The positive electrode material paste contains, for example, a raw material (lead powder and the like) of the positive electrode active material, and may further contain another additive. The negative electrode material paste contains a raw material (lead powder and the like) of the negative electrode active material; the paste preferably contains a resin (bisphenol-based resin and the like) having a sulfone group and/or a sulfonate group, as a dispersion agent; and the paste may further contain another additive.

The positive electrode material paste for obtaining the positive electrode material can be obtained, for example, according to the following method. When the positive electrode material paste is produced, red lead ($Pb_3O_4$) may be used as the raw material of the positive electrode active material, in view of enabling a reduction of the formation time.

Firstly, the additive (short fiber for reinforcement and the like) is added to the raw material of the positive electrode active material, and the dry-mixing is performed to obtain a mixture. Then, the positive electrode material paste is obtained by adding sulfuric acid (dilute sulfuric acid and the like) and a solvent (water such as ion-exchanged water, organic solvent, or the like) to this mixture; and performing the kneading.

The unformed positive electrode can be obtained by filling the current collector with the positive electrode material paste; and then performing the aging and drying.

In the case where the short fiber for reinforcement is used in the positive electrode material paste, the amount of the short fiber for reinforcement blended is preferably 0.005 to 0.3 mass%, and more preferably 0.05 to 0.3 mass%, based on the total mass of the raw material (lead powder and the like) of the positive electrode active material.

The aging conditions for obtaining the unformed positive electrode are preferably 15 to 60 hours in an atmosphere at a temperature of 35 to 85°C and a relative humidity of 50 to 98% RH. The drying conditions are preferably 15 to 30 hours at a temperature of 45 to 80°C.

The negative electrode material paste can be obtained, for example, according to the following method. Firstly, a mixture is obtained by adding additives (resin having sulfone group and/or sulfonate group, carbon material, short fiber for reinforcement, barium sulfate, and the like) to the raw material of the negative electrode active material; and performing the dry-mixing. Then, the negative electrode material paste is obtained by adding sulfuric acid (dilute sulfuric acid or the like) and a solvent (water such as ion-exchanged water, organic solvent, or the like) to this mixture; and performing the kneading. The unformed negative electrode can be obtained by filling the current collector with this negative electrode material paste; and then performing the aging and drying.

In the case where the resin having the sulfone group and/or the sulfonate group (bisphenol-based resin and the like), the carbon material, the short fiber for reinforcement or the barium sulfate is used in the negative electrode material paste, the amount of each component blended is preferably in the following range. The amount of the resin having the sulfone group and/or the sulfonate group blended is preferably 0.01 to 2.0 mass%, more preferably 0.05 to 1.0 mass%, further preferably 0.1 to 0.5 mass%, and particularly preferably 0.1 to 0.3 mass% in terms of the solid content of the resin, based on the total mass of the raw material (lead powder and the like) of the negative electrode active material. The amount of the carbon material blended is preferably 0.1 to 3 mass%, and more preferably 0.2 to 1.4 mass%, based on the total mass of the raw material (lead powder and the like) of the negative electrode active material. The amount of the short fiber for reinforcement blended is preferably 0.05 to 0.3 mass%, based on the total mass of the raw material (lead powder and the like) of the negative electrode active material. The amount of barium sulfate blended is

preferably 0.01 to 2.0 mass%, and more preferably 0.01 to 1.0 mass%, based on the total mass of the raw material (lead powder and the like) of the negative electrode active material.

The aging conditions for obtaining the unformed negative electrode are preferably 15 to 30 hours in an atmosphere at a temperature of 45 to 65°C and a relative humidity of 70 to 98% RH. The drying conditions are preferably 15 to 30 hours at a temperature of 45 to 60°C.

In the assembling step, for example, the unformed negative electrode and the unformed positive electrode that have been produced as described above are alternately layered via a separator, and current collecting portions of the electrodes that have the same polarity are connected (welded or the like) to each other with a strap, to thereby obtain a group of electrodes. This group of electrodes is arranged in a battery case to produce an unformed battery. Next, the electrolytic solution is poured into the unformed battery, and then a direct current is passed to perform the formation in the battery case. The lead acid storage battery is obtained by adjusting the specific gravity of the electrolytic solution after the formation, to an appropriate specific gravity.

The above described electrolytic solution contains, for example, sulfuric acid and an aluminum ion, and can be obtained by mixing sulfuric acid and aluminum sulfate powder. The aluminum sulfate dissolved in the electrolytic solution can be added as an anhydride or a hydrate.

A specific gravity of the electrolytic solution (electrolytic solution containing an aluminum ion) after the formation is preferably in the following range. The specific gravity of the electrolytic solution is preferably 1.25 or more, more preferably 1.26 or more, further preferably 1.27 or more, and particularly preferably 1.275 or more, in view of further suppressing a penetration short circuit or freeze and also in view of the further excellent discharge characteristics. The specific gravity of the electrolytic solution is preferably 1.33 or less, more preferably 1.32 or less, further preferably 1.31 or less, and particularly preferably 1.30 or less, in view of further improving the charge acceptability and the cycle characteristics. The value of the specific gravity of the electrolytic solution can be measured, for example, with a floating type specific gravity meter or a digital specific gravity meter made by Kyoto Electronics Manufacturing Co., Ltd.

The battery case is a member which can accommodate electrodes (polar plates and the like) in its inside. The battery case is preferably a member that has a box body of which the upper face is opened and has a lid body which covers the upper face of the box body, in view of easily accommodating the electrode therein. An adhesive, thermal welding, laser welding, ultrasonic welding and the like can be appropriately used in bonding of the box body to the lid body. The shape of the battery case is not limited in particular, but a rectangular shape is preferable so that the ineffective space becomes small when the electrode (polar plate that is plate-shaped body, and the like) is accommodated.

The material of the battery case is not limited in particular, but needs to be resistant to the electrolytic solution (dilute sulfuric acid and the like). Specific examples of the material of the battery case include PP (polypropylene), PE (polyethylene) and an ABS resin. When the material is PP, it is advantageous in terms of acid resistance, workability and economical efficiency. The PP is advantageous in terms of the workability, as compared with the ABS resin in which case heat welding between the battery case and the lid is difficult.

When the battery case is composed of the box body and the lid body, the materials of the box body and the lid body may be identical materials to each other, or may be different materials from each other. The materials of the box body and the lid body are preferably a material having the same coefficient of thermal expansion, from the viewpoint that a too large stress does not occur.

The condition of the formation and the specific gravity of the sulfuric acid can be adjusted according to the properties of the electrode active material. In addition, the formation treatment is not limited to being performed after the assembling step, but may be performed after aging and drying in the electrode production step (tank formation).

## Example

The present invention will be specifically described below with reference to examples. However, the present invention is not limited to only the following examples.

<Production of lead acid storage battery>

(Example 1)

[Production of positive electrode plate]

Lead powder and red lead ($Pb_3O_4$) were used as a raw material of the positive electrode active material (lead powder: red lead = 96 : 4 (mass ratio)). The raw materials of the positive electrode active material, 0.07 mass% of the short fiber for reinforcement (acrylic fiber) based on the total mass of the raw materials of the positive electrode active material, and water were mixed and kneaded. Subsequently, the kneading was performed while dilute sulfuric acid (specific gravity of 1.280) was added little by little, to produce a positive electrode material paste. An expanded grid body

which was produced by subjecting a rolled sheet consisting of a lead alloy to expand working was filled with the positive electrode material paste. Subsequently, the grid body (current collector) which was filled with the positive electrode material paste was aged in an atmosphere of a temperature of 50°C and a humidity of 98% for 24 hours. After that, the drying was performed to produce an unformed positive electrode plate.

[Production of negative electrode plate]

Lead powder was used as a raw material of the negative electrode active material. A mixture was added to the above described lead powder wherein the mixture contained 0.2 mass% (in terms of solid content) of Bisperse P215 (condensate of bisphenol-based compound, aminobenzenesulfonic acid and formaldehyde, trade name, and made by Nippon Paper Industries Co., Ltd.), 0.1 mass% of a short fiber for reinforcement (acrylic fiber), 1.0 mass% of barium sulfate, and 0.2 mass% of carbonaceous material (furnace black); and then the dry-mixing was performed (where the above described amount blended is an amount blended based on the total mass of the raw material of the negative electrode active material). Next, water was added, and then the kneading was performed. Subsequently, the kneading was performed while dilute sulfuric acid (specific gravity of 1.280) was added little by little, to thereby produce a negative electrode material paste. An expanded grid body which was produced by subjecting a rolled sheet consisting of a lead alloy to expand working was filled with the negative electrode material paste. Subsequently, the grid body (current collector) which was filled with the negative electrode material paste was aged in an atmosphere of a temperature of 50°C and a humidity of 98% for 24 hours. After that, the drying was performed to produce an unformed negative electrode plate.

[Preparation of separator]

A sack-shaped separator was prepared by processing the elongated sheet-like article, which contained polyethylene and silica particles and had a plurality of linear ribs and mini ribs arranged on one surface, into a sack shape so that the surface having the ribs and the mini ribs arranged thereon was positioned to the outside (see Figure 1 and Figure 3). Each of the ribs and the mini ribs is arranged in such a way as to be approximately parallel to each other, and extends in the longitudinal direction of the separator. In the transverse direction of the separator, the first regions each containing the rib are positioned between the two second regions containing the mini ribs. The details of the separator are shown below.

- Total thickness: 0.75 mm (thickness T of base portion: 0.2 mm, height H of rib: 0.55 mm, and H/T = 2.75)
- Interval of rib: 7.35 mm, upper bottom width B of rib: 0.4 mm, and lower bottom width A of rib: 0.8 mm
- Number of mini ribs in each of the second regions: 20
- Silica particles: the number of silica particles having a particle size (longest size) of 2 $\mu$m or more was 9 pieces in a range of 30 $\mu$m $\times$ 40 $\mu$m which was arbitrarily selected when the cross section of the separator was analyzed by a scanning electron microscope (SEM).

[Assembly of battery]

The unformed negative electrode plate was accommodated in the above described sack-shaped separator. Next, five unformed positive electrode plates, and six unformed negative electrode plates which were accommodated in the above described sack-shaped separator were alternately layered such that the ribs of the separator came in contact with the positive electrode plate. Subsequently, ear portions of the polar plates having the same polarity were welded to each other by a cast-on strap (COS) method to produce a polar plate group. The polar plate group was inserted into the battery case, to assemble a 2V single cell battery (which corresponds to single cell of B19 size specified in JIS D 5301). The dilute sulfuric acid (electrolytic solution) having a specific gravity of 1.23 in which aluminum sulfate anhydride was dissolved so that the aluminum ion concentration became 0.08 mol/L was poured into this battery. After that, the formation was performed at a passing current of 10A for 16 hours in a water bath at 50°C, the specific gravity of the electrolytic solution after the formation was adjusted to 1.280, to obtain the lead acid storage battery.

[Total amount of oxygen and silicon in separator]

Firstly, the separator at the time before the battery was assembled was cut by an ion-milling apparatus E-3500 (trade name, made by Hitachi High-Technologies Corporation), to expose the cross section of the separator. Next, the cross section of the separator was subjected to an EDX analysis by using a scanning electron microscope (trade name: JSM-6010LA, made by JEOL Ltd.). Mapping analysis was carried out at a magnification of 300 times; after the measurement, a separator portion was selected, and amounts of existence of carbon, oxygen and silicon were quantified;

and the amounts were converted into the masses of the respective elements. The total amount (mass%) of the masses of oxygen and silicon in the separator was calculated based on the total mass of the obtained carbon, oxygen and silicon. The conditions of the mapping analysis were set such that the acceleration voltage was 15 kV, the spot size was 72, the pressure in the low vacuum mode was 35 Pa, the dwell time was 1 millisecond, the process time was T4, the number of pixels was 512 × 384, and the number of integration was 5 times. A result of the quantitative analysis for each of the elements is shown in Table 1.

[Measurement of specific surface area]

A measurement sample for the specific surface area was produced according to the following procedure. Firstly, the formed battery was disassembled; the electrode plates (positive electrode plate and negative electrode plate) were taken out and were washed with water; and then were dried at 50°C for 24 hours. Next, 2 g of each of the electrode materials (positive electrode material and negative electrode material) was collected from the central portion of the above described electrode plate, and was dried at 130°C for 30 minutes to produce the measurement samples.

The amount of nitrogen gas adsorbed was measured at a liquid nitrogen temperature according to a multipoint method while the measurement sample which was produced in the above description was cooled with liquid nitrogen, and the specific surface areas of the positive electrode material and the negative electrode material after the formation were calculated according to the BET method. The measurement conditions were as shown below. As a result of having measured in this way, the specific surface area of the positive electrode material was 5 $m^2/g$ and the specific surface area of the negative electrode material was 0.6 $m^2/g$.

{Measurement conditions of specific surface area}

Apparatus: HM-2201FS (made by Macsorb Co., Ltd.)
Degassing time: 10 minutes at 130°C
Cooling: 4 minutes with liquid nitrogen
Adsorption gas flow rate: 25 mL/minute

(Examples 2 and 3)

Lead acid storage batteries were produced in a similar method to that in Example 1, except that the dilute sulfuric acids having a specific gravity of 1.280 (after formation) were used as the electrolytic solution, wherein the dilute sulfuric acids were prepared so that the aluminum ion concentrations became values shown in Table 1.

(Example 4)

A lead acid storage battery was produced in a similar method to that in Example 1, except that the dilute sulfuric acid having a specific gravity of 1.280 (after formation) was used as the electrolytic solution, wherein the dilute sulfuric acid was obtained by dissolving aluminum sulfate anhydride and sodium sulfate so that the aluminum ion concentration became 0.14 mol/L and the sodium ion concentration became 0.06 mol/L.

(Examples 5 to 8)

Lead acid storage batteries of Examples 5 to 8 were produced in similar methods to those in Examples 1 to 4, except that a nonwoven fabric (nonwoven fabric consisting of glass fiber with thickness of 0.3 mm) was arranged between the negative electrode plate and the separator. Specifically, the above described elongated sheet-like article (sheet-like article containing polyethylene and silica particle) and the nonwoven fabric were overlapped, then was worked into a sack shape so that the nonwoven fabric was positioned in the inside, to produce the sack-shaped separator. After that, the unformed negative electrode plate was accommodated in the above described sack-shaped separator so that the nonwoven fabric came in contact with both surfaces of the negative electrode plate.

(Comparative Example 1)

A lead acid storage battery was produced in a similar method to that in Example 1, except that the dilute sulfuric acid having a specific gravity of 1.280 (after formation) was used as the electrolytic solution, wherein the dilute sulfuric acid did not contain the aluminum ion.

(Comparative Example 2)

A lead acid storage battery was produced in a similar method to that in Example 1, except that the dilute sulfuric acid having a specific gravity of 1.280 (after formation) was used as the electrolytic solution, wherein the dilute sulfuric acid was obtained by dissolving sodium sulfate so that the sodium ion concentration became 0.1 mol/L.

(Comparative Example 3)

A lead acid storage battery was produced in a similar method to that in Example 5, except that the dilute sulfuric acid having a specific gravity of 1.280 (after formation) was used as the electrolytic solution, wherein the dilute sulfuric acid did not contain the aluminum ion.

<Evaluation of battery characteristics>

Concerning the above described lead acid storage batteries, the charge acceptability, the suppressing effect on the penetration short circuit and the suppressing effect on the overcharge liquid reduction (liquid reduction of electrolytic solution due to overcharge) were evaluated as shown below. The results are shown in Table 1. "-" in Table 1 means that aluminum sulfate or sodium sulfate was not blended.

(Charge acceptability)

The produced lead acid storage battery was discharged at a constant current of 5.6 A for 30 minutes at an ambient temperature of 25°C, and was left for 6 hours. After that, the lead acid storage battery was charged at a constant voltage of 2.33 V under a limited current of 100 A for 60 seconds, and values of an electric current having had passed until the 5th second from the start of charging were measured. The charge acceptability was relatively evaluated assuming that the measurement result of Comparative Example 1 was 100.

(Penetration short circuit-suppressing effect)

The produced lead acid storage battery was discharged at a constant current of 1.4 A at an ambient temperature of 25°C. Next, the lead acid storage battery was discharged until the cell voltage reached 1.75 V, then was connected to a lamp of 10 w, and was left in an overdischarged state at an ambient temperature of 40°C for 5 days. After that, the charging was performed at a cell voltage of 2.33 V under a limited current of 25 A at an ambient temperature of 25°C for 8 hours. A point of time was determined as an occurrence of the short circuit when the fluctuation of an electric current during charging (fluctuation of electric current of 0.3 A or more) or a high stop (3 A or more) of an end-stage current (electric current passing after approximately 8 hours from start of charging) occurred due to the repetition of the above discharge and charging; and the repetition number before the short circuit occurred was measured. The penetration short circuit-suppressing effect was relatively evaluated assuming that the measurement result of Comparative Example 1 was 100.

(Overcharge liquid reduction-suppressing effect)

The overcharge at a constant voltage of 2.4 V was performed at an ambient temperature (temperature of water tank) of 60°C, for 42 days. The weights before and after this charging were measured, the weight differences (amounts of liquid reduction by overcharge (amounts of overcharge liquid reduction)) were compared, and thereby the overcharge liquid reduction-suppressing effect was evaluated. The overcharge liquid reduction-suppressing effect was relatively evaluated assuming that the measurement result of Comparative Example 1 was 100. The smaller the amount of the overcharge liquid reduction is, the better the overcharge liquid reduction-suppressing effect is.

[Table 1]

| | Element content of separator (mass%) | | | Nonwoven fabric | Composition of electrolytic solution (mol/L) | | Battery characteristics | | |
|---|---|---|---|---|---|---|---|---|---|
| | Carbon | Oxygen | Silicon | | Al ion | Na ion | Charge acceptability | Penetration short circuit-suppressing effect | Overcharge liquid reduction-suppressing effect |
| Example 1 | 40 | 38 | 22 | Absent | 0.08 | - | 115 | 188 | 90 |
| Example 2 | 40 | 38 | 22 | Absent | 0.14 | - | 116 | 238 | 82 |
| Example 3 | 40 | 38 | 22 | Absent | 0.2 | - | 119 | 275 | 74 |
| Example 4 | 40 | 38 | 22 | Absent | 0.14 | 0.06 | 117 | 238 | 78 |
| Example 5 | 40 | 38 | 22 | Present | 0.08 | - | 109 | 188 | 51 |
| Example 6 | 40 | 38 | 22 | Present | 0.14 | - | 110 | 238 | 47 |
| Example 7 | 40 | 38 | 22 | Present | 0.2 | - | 113 | 275 | 43 |
| Example 8 | 40 | 38 | 22 | Present | 0.14 | 0.06 | 111 | 238 | 45 |
| Comparative Example 1 | 40 | 38 | 22 | Absent | - | - | 100 | 100 | 100 |
| Comparative Example 2 | 40 | 38 | 22 | Absent | - | 0.1 | 109 | 113 | 95 |
| Comparative Example 3 | 40 | 38 | 22 | Present | - | - | 95 | 100 | 57 |

It has been confirmed that Examples 1 to 8 are excellent in penetration short circuit-suppressing effect as compared with Comparative Examples 1 to 3. In Comparative Examples 1 to 3, the electrolytic solution does not contain the aluminum ion, and accordingly it is inferred that there is no precipitation of an aluminum compound such as aluminum hydroxide, and accordingly that the penetration short circuit-suppressing effect is not excellent.

It has been confirmed that Examples 1 to 8 are excellent in overcharge liquid reduction-suppressing effect as compared with Comparative Examples 1 and 2.

It has been conformed from comparison between each of Examples 1 to 3 and Comparative Example 1 and comparison between each of Examples 5 to 7 and Comparative Example 3 that the overcharge liquid reduction is suppressed by the electrolytic solution containing the aluminum ion, as compared with the case where the electrolytic solution does not contain the aluminum ion.

It has been confirmed that in Examples 5 to 8 using a nonwoven fabric, the overcharge liquid reduction is greatly suppressed while a penetration short circuit-suppressing effect equivalent to that in Examples 1 to 4 is maintained. Specifically, it has been confirmed that the overcharge liquid reduction can be suppressed by the nonwoven fabric being used, with no decrease in penetration short circuit-suppressing effect.

It has been confirmed that, due to the effect of the aluminum ion, Examples 1 to 8 are excellent in charge acceptability as compared with Comparative Examples 1 and 3, and also can obtain a charge acceptability equal to or more than that of Comparative Example 2. In Comparative Example 3, the charge acceptability was lowered by using the nonwoven fabric, though the overcharge liquid reduction was suppressed. This is inferred to be because the diffusion of a sulfate ion has been suppressed by the nonwoven fabric.

**Reference Signs List**

10 and 20: separator, 10a: one surface, 10b: other surface, 11: base portion, 12: rib, 13: mini rib, 14, 14a and 14b: electrode, 22: mechanically sealed portion, 30: nonwoven fabric, A: lower bottom width of rib, B: upper bottom width of rib, H: height of rib, T: thickness of base portion

**Claims**

1. A lead acid storage battery comprising:

   a positive electrode and a negative electrode facing each other via a separator; and
   an electrolytic solution, wherein
   the separator contains a polyolefm and silica, and
   the electrolytic solution contains an aluminum ion.

2. The lead acid storage battery according to claim 1, wherein a total mass of oxygen and silicon in the separator is 30 to 80 mass%, based on a total mass of carbon, oxygen and silicon, in an elemental analysis according to energy dispersive X-ray spectrometry.

3. The lead acid storage battery according to claim 1 or 2, wherein a concentration of the aluminum ion in the electrolytic solution is 0.01 to 0.3 mol/L.

4. The lead acid storage battery according to any one of claims 1 to 3, wherein the electrolytic solution further contains a sodium ion.

5. The lead acid storage battery according to claim 4, wherein a concentration of the sodium ion in the electrolytic solution is more than 0.05 mol/L.

6. The lead acid storage battery according to any one of claims 1 to 5, wherein the separator has a first rib, and a base portion supporting the first rib.

7. The lead acid storage battery according to claim 6, wherein a height H of the first rib is 0.9 mm or less.

8. The lead acid storage battery according to claim 6 or 7, wherein a ratio H/T of a height H of the first rib to a thickness T of the base portion is 3.5 or less.

9. The lead acid storage battery according to any one of claims 6 to 8, wherein an upper bottom width B of the first rib

is 0.35 mm or more.

**10.** The lead acid storage battery according to any one of claims 6 to 9, wherein a ratio B/A of an upper bottom width B of the first rib to a lower bottom width A of the first rib is 0.45 to 0.55.

**11.** The lead acid storage battery according to any one of claims 6 to 10, wherein
the separator is an elongated separator further having a second rib,
the base portion supports the second rib,
the first rib and the second rib extend in a longitudinal direction of the separator,
each of both end portions in a transverse direction of the separator includes 10 to 40 of the second ribs, and
a region between both of the end portions includes the first rib.

**12.** The lead acid storage battery according to any one of claims 1 to 11, wherein the separator has a sack shape wrapping at least one electrode of the positive electrode and the negative electrode.

**13.** The lead acid storage battery according to any one of claims 1 to 12, further comprising a nonwoven fabric between the positive electrode and the negative electrode.

**14.** The lead acid storage battery according to claim 13, wherein the nonwoven fabric includes at least one selected from the group consisting of an organic fiber, a glass fiber and pulp.

Fig.1

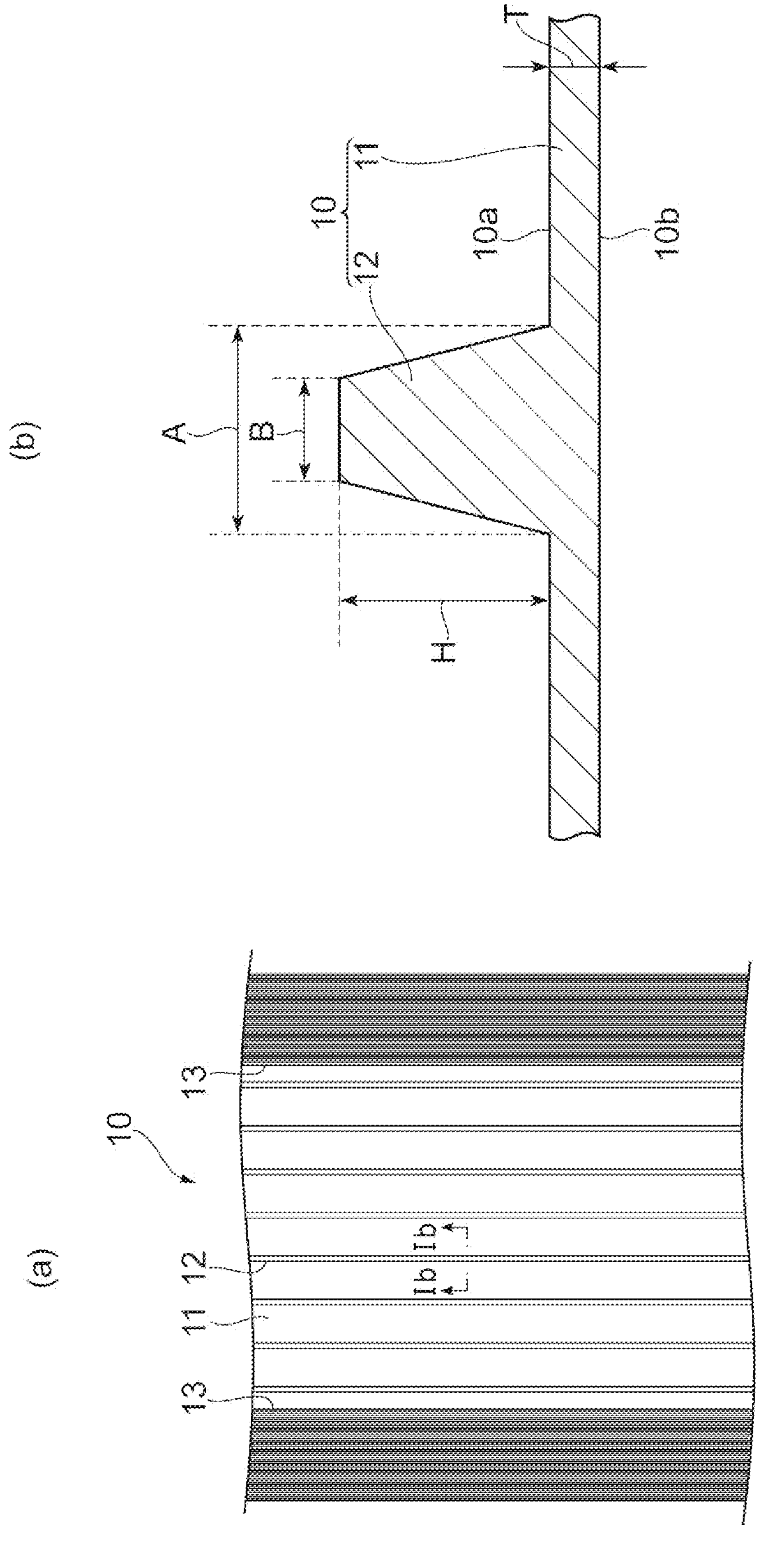

*Fig.2*

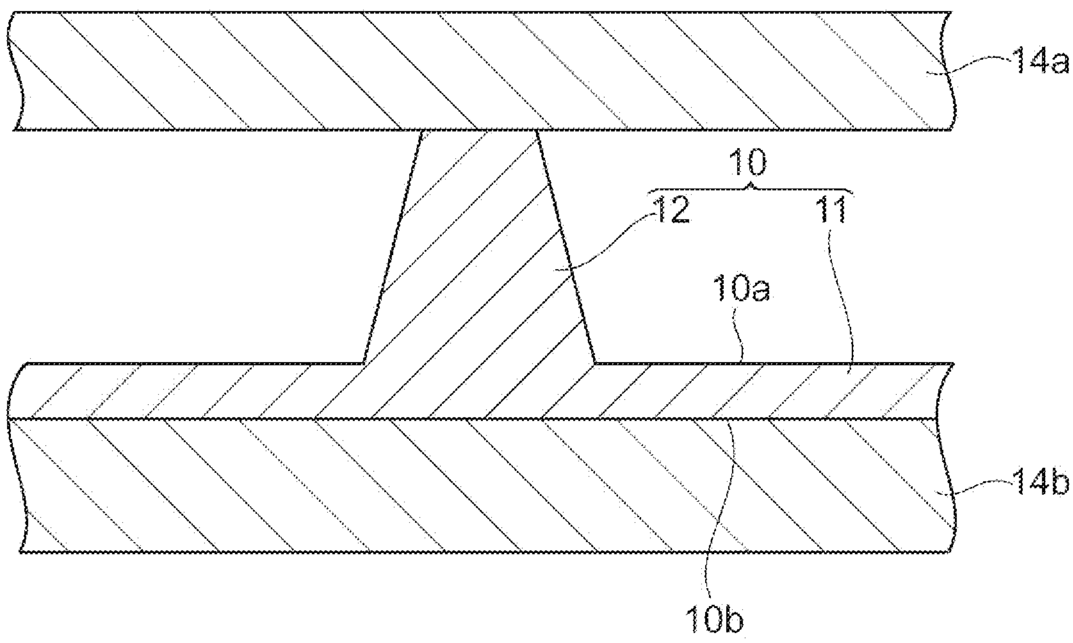

*Fig.3*

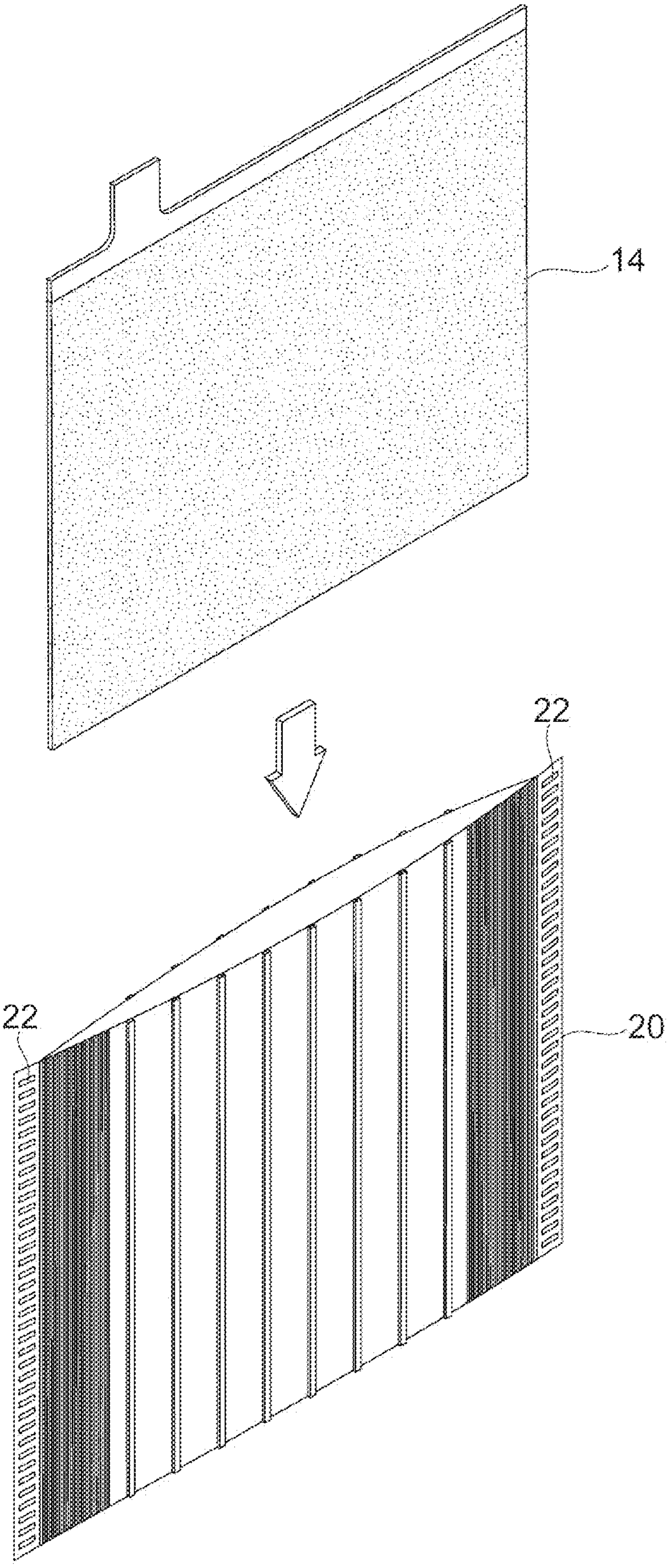

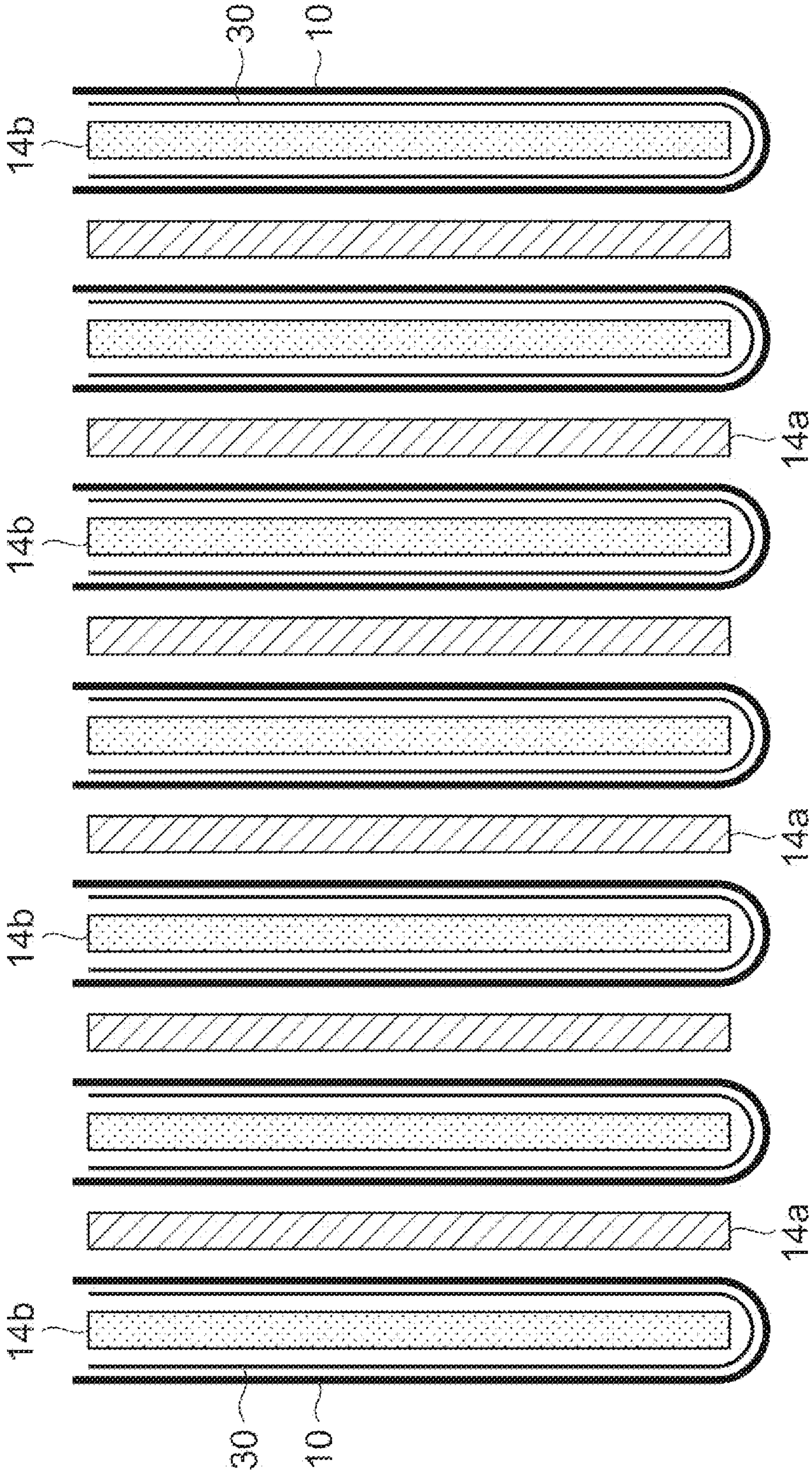


Fig.4

## INTERNATIONAL SEARCH REPORT

International application No.
PCT/JP2016/067115

A. CLASSIFICATION OF SUBJECT MATTER
*H01M10/06*(2006.01)i, *H01M2/16*(2006.01)i, *H01M2/18*(2006.01)i, *H01M10/08*(2006.01)i, *H01M10/12*(2006.01)i

According to International Patent Classification (IPC) or to both national classification and IPC

B. FIELDS SEARCHED

Minimum documentation searched (classification system followed by classification symbols)
H01M10/06, H01M2/16, H01M2/18, H01M10/08, H01M10/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-228637 A (Nippon Sheet Glass Co., Ltd.), 31 August 2006 (31.08.2006), claim 1; paragraphs [0023] to [0025]; table 1; fig. 1 to 3 (Family: none) | 1-14 |
| Y | JP 2015-32481 A (GS Yuasa International Ltd.), 16 February 2015 (16.02.2015), claims 1, 5, 7; paragraphs [0008], [0016], [0019], [0038] (Family: none) | 1-14 |
| Y | JP 2001-93500 A (Nippon Muki Co., Ltd.), 06 April 2001 (06.04.2001), paragraphs [0004], [0009]; table 1; fig. 1 (Family: none) | 8-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 August 2016 (31.08.16) | 13 September 2016 (13.09.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No. PCT/JP2016/067115

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-231995 A (Matsushita Electric Industrial Co., Ltd.), 05 September 1997 (05.09.1997), claim 1; paragraph [0012]; fig. 1 (Family: none) | 11-12 |
| Y | JP 2013-41848 A (Shin-Kobe Electric Machinery Co., Ltd.), 28 February 2013 (28.02.2013), paragraphs [0022], [0028] (Family: none) | 13-14 |
| E,X | JP 2016-154131 A (GS Yuasa International Ltd.), 25 August 2016 (25.08.2016), claims 1, 8 to 9; paragraphs [0024] to [0027], [0039] to [0040]; fig. 1, 11 to 12 (Family: none) | 1-3,6,12 |
| E,X | WO 2016/121510 A1 (Hitachi Chemical Co., Ltd.), 04 August 2016 (04.08.2016), claims 1 to 2, 5, 17 to 19; paragraphs [0114] to [0116], [0125], [0127]; table 1; fig. 1 to 3 (Family: none) | 1-3,6-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013211115 A